# EUROPEAN PATENT APPLICATION

(11) **EP 3 907 054 A1**
(43) Date of publication of application: **10.11.2021**
(21) Application number: 21000114.5
(22) Date of filing: 23.04.2021
(51) Int. Cl.: B29B 7/00, B29B 7/72, B29B 7/92, C08L 3/02, B29B 7/42, B29B 7/48, B29B 7/82, B29B 9/06, B29B 9/12, B29C 48/00

(54) **METHOD OF PRODUCTION THERMOPLASTIC STARCH, AND THERMOPLASTIC STARCH SO PRODUCED**

(30) Priority: 07.05.2020 PL 43386220
(71) Applicant: Grupa Azoty S.A., 33-101 Tarnow (PL)
(72) Inventor: Pantol, Magdalena, 33-100 Tarnów (PL); Jasnosz, Józef, 33-140 Lisia Góra (PL); Szostak, Sebastian, 33-101 Tarnów (PL)
(74) Representative: Krawczyk, Lilianna

(57) **Abstract**

Method of production thermoplastic starch comprising the steps of: mixing starch and at least one plasticizer in a mixer in order to produce thermoplastic starch pre-blend, extruding resulting thermoplastic starch pre-blend to obtain starch extrudate, air-cooling of starch extrudate and optionally granulation of air-cooled starch extrudate, characterized in that the extrusion step follows directly after the mixing step without conditioning step. Further disclosed is thermoplastic starch prepared with said method.

## Description

The subject of the invention is the method of production thermoplastic starch using plasticizers and thermoplastic starch produced by using this method.

Development of thermoplastic starch production technology in industrial scale in order to apply it in injection moulding and blow moulding is one of present crucial problems. The analysis of market needs considering industrial reports clearly indicates the constantly growing needs for biodegradable products, which also includes thermoplastic starch.

Starch is a natural polymer built of glucose units linked with 1,4-glycosidic bonds which are forming amylose double helices and glucose units linked with 1,6- and 1,4-glycosidic bonds in branched amylopectin structure. Amylose content is estimated to be, dependent on starch origin, between 15-30%. The presence of amylose crystallites is responsible for starch brittleness. Therefore in order to plasticize the starch, those crystalline structures have to be destroyed via proper treatment. The starch is highly hygroscopic material, which swells in water because of water molecules penetration into its branched structure. Due to the significant differences in the properties of amylose and amylopectin, their mutual proportions in starch granules determine the physicochemical properties and technological suitability of a particular type of starch. In plasticization method of starch it is necessary to apply the plasticizer, what results from the fact that melting point of starch is higher compare to its decomposition temperature. Water, glycerin, propylene glycol, sorbitol are the most common plasticizers. The application of polyesters, amides and urea is also known in the art. Plasticization is observed i.a. in the case of starch gelatinization process using water in higher temperature. Glycerin is the other commonly used plasticizer. In addition to plasticizer, the plastification conditions are crucial in production methods of thermoplastics starch. The most important parameters are temperature, rotation speed, sheer forces.

In the state of the art there is a number of technological solutions concerning methods of thermoplastic starch production. PL 216930 discloses the production method of thermoplastic starch - TPS in two steps. In step one dry starch preblend containing starch and glycerine is produced at 60-100°C using sheer forces, and it is subsequently conditioned for 24h. After 24 hours of conditioning the blend is extruded in twin-screw extruder at 150-180°C and granulated.

PL/EP 3064542 refers to the production method of biodegradable thermoplastic polymeric composition comprising modified thermoplastic starch (mTPS) and PLA. Document describes the method of production of preblend containing starch, glycerine and modification additives such as agar-agar or epoxidated soya oil and/or acacia gum at room temperature. The blend is then conditioned for 24 h and extruded. Granulated product of mTPS is extruded with PLA in the next step.

US 6136097 discloses thermoplastic starch preparation method of improved properties, obeying the starch modification in the presence of plasticizer such as glycerine with addition of emulsifier - glycerine monostearate, in conditions of high sheer and temperature in extruder.

WO 0248198 refers to production method of thermoplastic starch stable in shape intended for blow moulding. The method obeys the extrusion of native starch at 65-120°C in the presence of water and/or ethylene or propylene glycol or dimethylformamide.

WO 9005161 discloses the production method of thermoplastic starch consisting of extruding the native starch with addition of substance lowering its melting point, namely dimethylsulphoxide and/or 1,3-butanediol and/or formamide and/or glycerine and/or ethylene or propylene glycol and/or dimethylacetamide, in amount higher than 5%.

Further, US 6472497 refers to the production method of thermoplastic starch consisting of starch destructing with hydrophobic polymer in amount of 10-40% acting as plasticizer. Such plasticizer belongs to aliphatic polyesters group or co-polyesters with aliphatic or aromatic blocks, urethan polyesters, amide polyesters or mixtures thereof.

Another document PL 171872 describes the production method of biodegradable material consisting of melting the biodegradable synthetic material at 240°C with starch containing 20% of water or with cellulose. Granulate is obtained from resulting dispersion.

PL 170436 refers to the production method of thermoplastic material containing starch, polyvinyl alcohol and ethylene - acrylic acid copolymer and water and plasticizer mixture. Obtained mixture is swollen and after that extruded in extruder in variable temperature and dynamic conditions at temperature range of 80-180 °C.

PL 174799 discloses the production method of biodegradable compositions via direct blending of starch, plasticizers and synthetic polymers. The blend containing the 9-15% of water is then extruded.

PL 214329 discloses the production method of biodegradable composition in three steps, wherein in the first step starch is blended in extruder with glycerine at 130-150°C, then in the second step polylactide and maleic anhydride are melted at 100-140°C. Third step consists of simultaneous melting of granulates from first and second steps in extruder with addition of polylactide at 80-150°C. The melt thus obtained contains 30-60% of plasticized starch and 40-70% of polylactide and polylactide grafted with maleic anhydride mixture.

PL 173504 describes the production method of biodegradable composition in the case of which the starch is premodified in chemical - thermal way. Water suspension of starch is treated with lye, acids or undergoes the esterification or oxidation processes, and after all the material obtained is mixed with synthetic polymer.

PL 159070 discloses the production method of polymeric melt from destructurized potato starch with hydrophobic synthetic thermoplastic polymer.

PL 207301 discloses the production method of biodegradable polymeric material containing thermoplastic polymer and modified starch. In that case, starch is modified via mixing it with plasticizer of plasticizing mixture in amount of 2-5% and the mixture undergoes thermal dynamic treatment at 40-170°C. Modified starch is then extruded at temperature range of 120-190°C with at least two thermoplastic polymers selected from polyolefins, vinyl polymers, polyesters and polyurethane groups. What is important, at least one of such thermoplastic polymers should exhibit the properties compatibilizing of hydrophilic and hydrophobic components. Weight ratio of starch compare to overall polymers mass is 1:1,1 - 1,4.

EP 2380915 describes the production method of thermoplastic starch maintaining shape stability intended to production of elements using injection moulding and blow moulding. The method consists of extruding of native starch in the presence of destructurizing agent (water) at 65-120°C and/or such substances as: polyfunctional alcohols, ethylene or propylene glycol or dimethylformamide.

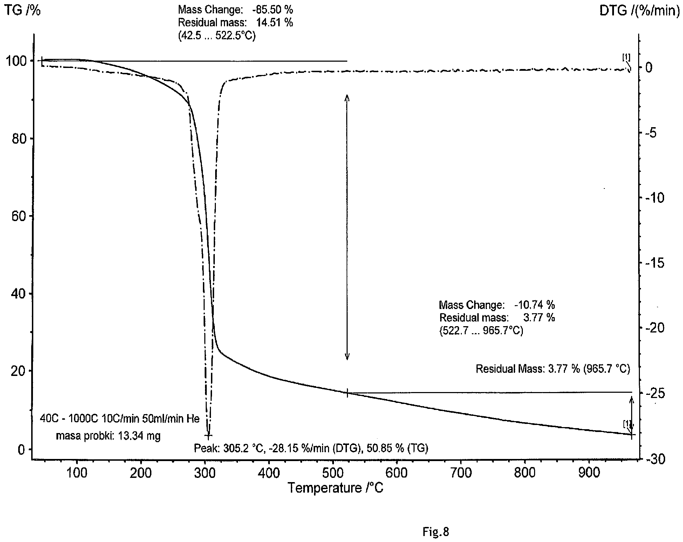

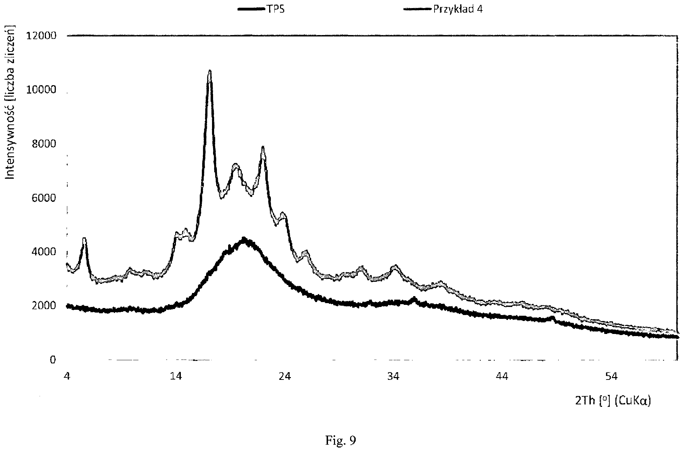

Considering the fact that starch is a natural product with variable water and amylose and amylopectin contents, the parameters of the production have to be chosen in such way that despite of the variability of material content, the obtained starch granulate would maintain the stability of parameters. The fact of great importance is that thermoplastic starch according to the invention undergoes decomposition at temperature above 300°C (Fig.8) and the thermoplastic starch (TPS) does not contain crystalline phase (Fig. 9).

Development of production technology in industrial scale for application in injection moulding and blow moulding still remains the unsolved issue as present methods of starch production are intended for laboratory use mainly. It is most important for the technological process that the process lasts in a continuous system, because in other cases additional devices for storage (conditioning) and dosing in the form of silos and a system of feeders integrated with these silos are required. The main obstacle in the case of application of known methods in industrial scale is the fact that preblend produced using those methods is highly viscous and because of that it is difficult to dispense, what makes such methods almost impossible to use in production scale. Another issue is, that methods known from the state of art do not allow to remove water excess, which is usually present in native starch in amount of 19% is problematic during the process of extrusion. It is possible to extrude native starch directly but it requires properly customized extruder. There is also the possibility that this way of carrying out the process (without using proper additives) could be effect of obtaining unsatisfactory polymer properties.

The aim of the invention was to establish the method of production thermoplastic starch allowing to avoid difficulties concerning the processing of produced thermoplastic starch, what makes possible to apply such method in industrial scale.

The subject of the invention is the method of production thermoplastic starch comprising the steps of:
a) mixing the starch and at least one plasticizer in mixer in order to obtain preblend of thermoplastic starch;
b) extruding preblend of thermoplastic starch obtained in the step a) in order to obtain starch extrudate;
c) air-cooling of starch extrudate;
d) optional granulation of air-cooled starch extrudate,
characterised in that, the step b) follows directly after the step a) without conditioning step

Preferably, in the method of production thermoplastic starch according to the invention the plasticizer applied in step a) is chosen from the group comprising citric acid, water, glycerine, sorbitol, more preferably the plasticizer is the mixture of glycerine and citric acid.

Preferably, citric acid content is at most 5 weight % based on the starch and plasticizer mixture.

Preferably, in the method according to the invention the weight ratio of starch to plasticizer and/or plasticizers mixture is in the range of 2:1 to 20:1.

Preferably, the water content in the mixture of starch and plasticizer and/or plasticizers mixture in the step a) is at most 12 weight % based on the starch and plasticizer mixture.

Preferably, the water content in preblend obtained in step a) is in the range of 2,5-4 weight % based on the starch and plasticizer mixture.

Preferably, the mixer temperature in step a) of the method according to the invention is in the range of 60-120 °C and rotation speed of mixer is set on 60-150 rpm.

Preferably the time of mixing in step a) of the method according to the invention is 1-9 h.

Preferable, the preblend obtained in step a) of the method according to the invention has bulk density at most 650 kg/m³, more preferably 615 - 645 kg/m³.

Preferably in step b) of the method according to the invention the extrusion is conducted in single- or twin-screw extruder.

Preferably the temperature in step b) of the method according to the invention ranges from 130-150 °C.

Preferably the speed of screw rotation in step b) of the method according to the invention ranges from 50-70 rpm for single-screw extruder and is < 136 rpm for twin-screw extruder.

Preferable the method is conducted in continuous mode.

Preferably the starch is potato starch.

Also the subject of the invention is thermoplastic starch produced with method according to the invention.

The main advantage of the invention is that it omits the conditioning step of starch which usually is present before its extrusion and conducting the extrusion step directly after mixing the starch with plasticizer. The proper preparation - without using conditioning step allows to produce the loose starch preblend of reduced water content (reduced by 80% based on overall water content in preblend), what ensures better dispensing and further processing on industrial scale. In addition the preblend does not change in time what allows to dispense it continuously without risk that granulate extruded from it will change its properties.

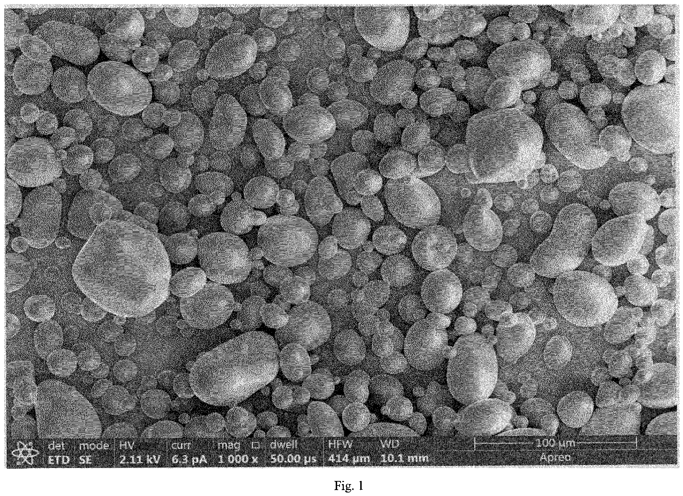

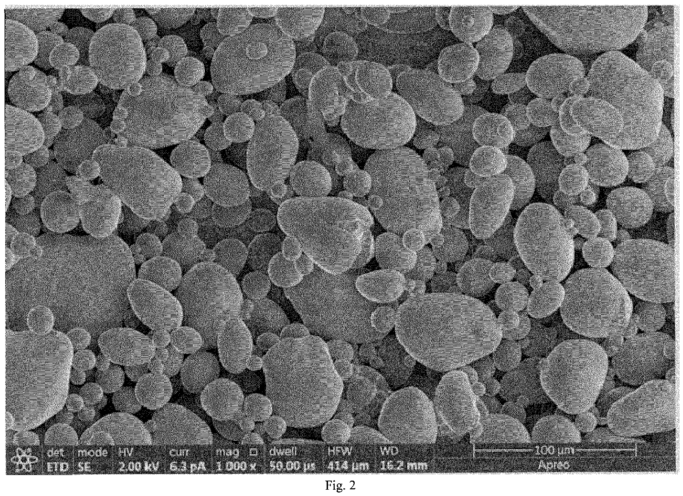

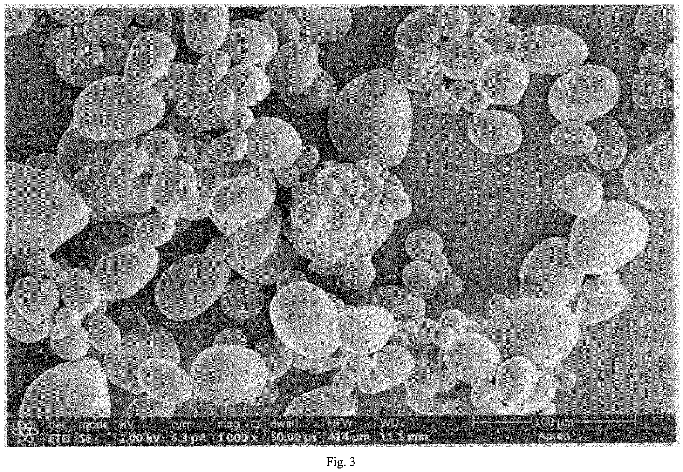

Elimination of conditioning step is of great technological importance especially considering the fact that it allows direct dispensing the preblend into the extruder working in continuous mode using gravimeter feeder. Moreover the technological process itself is more economic due to the fact that silos usually needed for conditioning step are not required anymore as well as the system of feeders or extruder customization. It is important that such a preblend is not in native form but in plasticized form what significantly improves its processing properties. Moreover, the addition of citric acid in amount of < 5 weight % has a beneficial influence on plasticity improvement of final product being the thermoplastic starch granulate and at the same it limits its hygroscopic properties and affects maintaining the correct structure of granulate. The images made with the SEM technique show subsequent stages of plasticization of starch in a mixer. Fig. 1 shows native starch. The image shows separated starch grains. Fig 2 shows the changes that occur during the preparation of the preblend in a mixer. Cracking of starch grains is visible. The image (Fig. 3) shows the formation of agglomerates, appropriate for a properly prepared preblend.

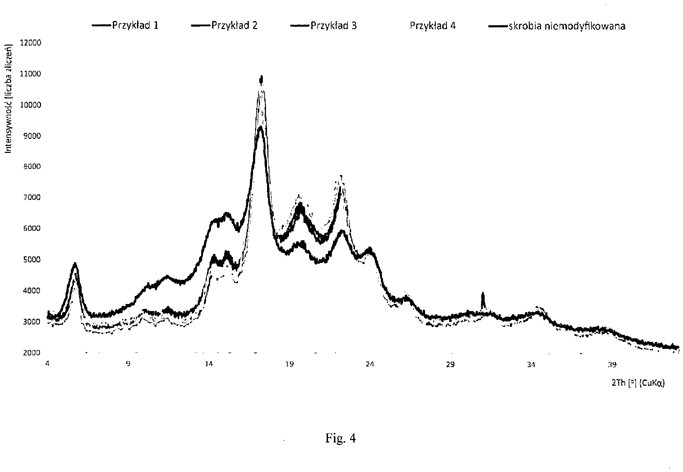

Clear differences in diffraction imagines (Fig.4) in relation to unmodified starch are seen in every analyzed sample. It could be said that the introduction of plasticizer and treatment in higher temperature in the mixer at rotation speed 150 rpm have influence on the degree of crystallinity of samples (Fig.4).

The other advantage is the fact that produced starch preblend requires lower extrusion temperatures compare to those according to the state of the art in the case of direct methods and after conditioning step, namely lower than 150 °C.

### Figures description

Fig. 1 shows SEM picture of the potato starch
Fig 2. shows a picture of the preblend during its production (several dozen minutes from the beginning of its mixing and heating with plasticizers)
Fig. 3 shows a picture of the preblend made during its preparation, about 30 min before completion
Fig. 4. shows the diffraction pattern of the preblend made during its preparation and native starch
Fig. 5 shows SEM picture of the preblend after initial preparation in double ribbon horizontal mixer (Example 1)
Fig. 6 shows SEM picture of the preblend after initial preparation in double ribbon horizontal mixer (Example 4)
Fig. 7 shows SEM picture of the preblend after initial preparation in double ribbon horizontal mixer (Example 5)
Fig. 8 shows graph corresponding to TG experiment results for TPS granulate produced from preblend prepared according to the Example 4.
Fig. 9 shows the diffraction pattern of the preblend and thermoplastic starch (TPS)
Fig. 10 shows SEM picture of the preblend after 24 h of conditioning (mixing for 0,5h, 120°C, 150rpm)

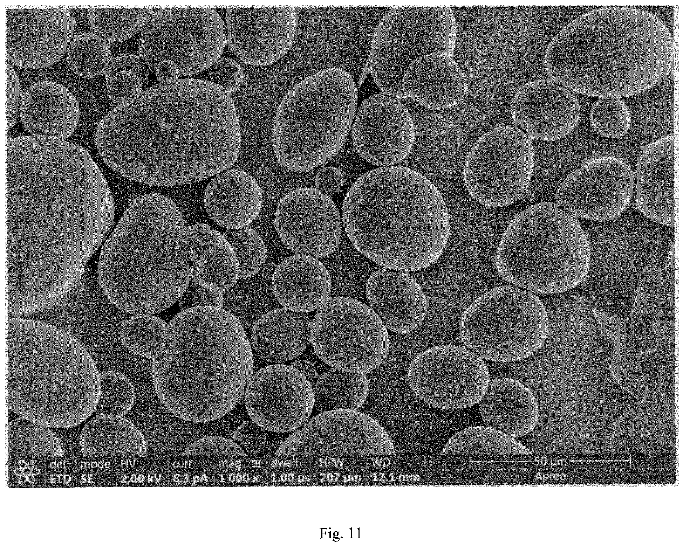

Fig. 11 shows SEM picture of the preblend after 24 h of conditioning (mixing for 0,5h, 50°C, 150rpm)

### Embodiments

The invention has been illustrated with the following embodiments, which are not intended to limit the scope of the invention.

In embodiments of method according to the invention custom-made ERWEKA double ribbon horizontal mixer and Axon Bx25 single-screw extruder equipped with Axon BDB-G granulator and Maris TM30 MW40D twin-screw extruder equipped with Meccanoolastica T10 granulator have been used.

SEM measurements has been performer using high resolution scanning electron microscope Thermo Fisher Scientific Apreo S Lo Vac. Water content was studied using 756/831 KF Coulometer, Methrom. TG studies have been performer using STA 449 F5 Jupiter NETZSCH equipment.

Real density testing was performed on AccuPyc 1340TC Syl & Ant Instruments.

X-ray diffraction studies have been carried out using Empyrean 3rd generation Malvern Panalytica diffractometer.

The starch used in methods according to the invention has been purchased from ZETPEZET As plasticizers glycerine 99,5% (produced by TechlandLab, Tarnobrzeg), citric acid (CHEMPUR) and sorbitol ≥98% (MERCK/Sigma-Aldrich) have been used.

Climate tests have been conducted in BINDER KBF 115 climate chamber.

Air-cooling of extrudate has been conducted using air blowing applying fan system.

Specific parameters for preblends and granulates prepared according to the Examples 1-7 according to the invention are shown in table 1 below.

**Table 1. Granulates and preblends parameters**

| Example | Water content [%] in preblend (dispensed to extruder) | Bulk density (loose) of preblend (dispensed to extruder) [kg/m³] | Water content in granulate (after extrusion) [%] | Actual density of the granulate [g/cm³] |
|---|---|---|---|---|
| 1 | 3,53 | 615 | 2,3 | 1,461 |
| 2 | 3,00 | 624 | 1,7 | 1,461 |
| 3 | 2,90 | 629 | 1,5 | 1,474 |
| 4 | 3,45 | 626 | 2,2 | 1,462 |
| 5 | 3,26 | 616 | 2,4 | 1,454 |
| 6 | 3,62 | 615 | 1,9 | 1,470 |
| 7 | 3,70 | 645 | 2,9 | 1,472 |

### Example 1.

Potato starch in amount of 75 weight % was mixed with 24,5 weight % of glycerine and 0,5 weight % of citric acid in double ribbon horizontal mixer at 120°C. Mixing process was conducted for 2 h with rotation speed of 150 rpm. Directly after mixing has been finished, the preblend has been dosed using gravimeter feeder in order to extrude it. Extrusion has been conducted using single-screw extruder maintaining the following temperatures in consecutive zones: 120/135/135/135/135/140, with screws rotation speed of 64,5rpm. Extrudate of 3mm cross section diameter has been air-cooled and fed to granulator.

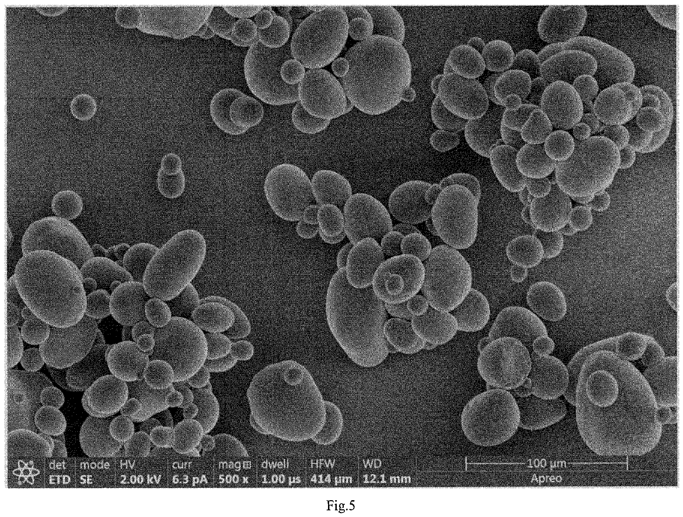

The SEM image of the preblend was shown in the image (Fig. 5). Agglomerates of small starch granules are visible in the image, which are not observed in the SEM image of native starch (Fig. 1)

### Example 2

Preblend prepared according to the method of Example 1, in the same temperature, rotation speed and mixing time conditions and using 24 weight % of glycerine and 1 weight % of citric acid has been directly fed using gravimeter feeder in order to extrude it. Extrusion has been conducted using single-screw extruder maintaining the following temperatures in consecutive zones: 110/132/132/132/132/142 with screws rotation speed of 66 rpm. Extrudate of 3mm cross section diameter has been air-cooled and fed to granulator.

### Example 3

Potato starch in amount of 81 weight % (15,3 weight % water content) and glycerine in amount of 19 weight % (water content < 0,5 weight %) have been dosed at the same time into double ribbon horizontal mixer heated to 120°C Starch and glycerine composition has been mixed for 1,5 hours at 120°C (during the process the steam and gas products has been continuously removed), and blend thus obtained has been fed into twin-screw extruder using gravimeter feeder. Starch-glycerine preblend has been fed to extruder directly without conditioning. Extrusion has been conducted using single-screw extruder maintaining the following temperatures in consecutive zones: 40/110/145/145/145/140/140/140/140/140, with screws rotation speeds of 130-136 rpm. Extrudate has been air-cooled and fed to granulator.

### Example 4

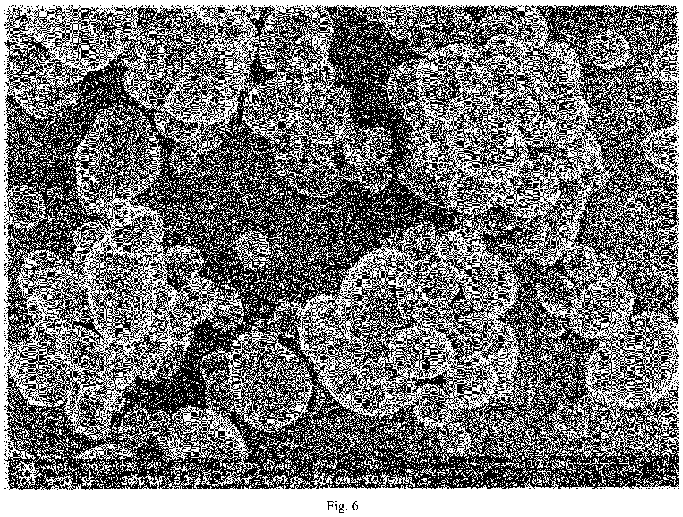

Preblend has been prepared as in Example 3 in the same temperature and rotation speed conditions. Weight ratio of starch to glycerine was 3:1. Mixture has been mixed for 2h. SEM of resulting preblend with visible agglomerates of starch grains has been shown on Figure 6. Directly after mixing has been finished, the preblend has been dosed using gravimeter feeder in order to extrude it. Extrusion has been conducted using single-screw extruder maintaining the following temperatures in consecutive zones: 120/140/140/140/140/150, with screws rotation speeds of 62 rpm. Extrudate of 3mm cross section diameter has been air-cooled and fed to granulator.

### Example 5

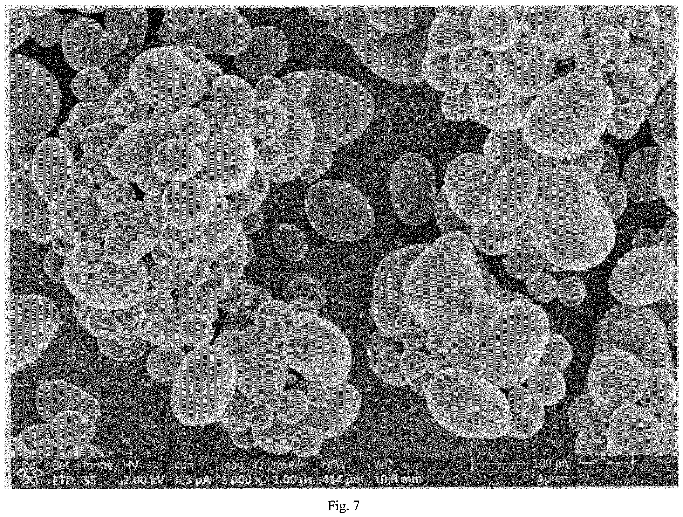

Thermoplastic starch has been prepared from preblend produced according to Example 4 using twin-screw extruder in extrusion step and maintaining the following temperatures in consecutive zones: 40/110/145/145/145/140/140/140/140/140, with screws rotation speeds of 130-136 rpm. Extrudate of 7 mm cross section diameter has been air-cooled and fed to granulator. SEM of resulting preblend with visible agglomerates of starch grains has been shown on Figure 7

### Example 6

Preblend has been prepared in double ribbon horizontal mixer at 120°C. Potato starch and sorbitol (70% solution) have been dosed into mixer in the weight ratio of 20:1. Mixer contents have been mixed for 3h and then resulting preblend has been fed to the extruder directly after first step has been finished. Extrusion has been conducted using single-screw extruder maintaining the following temperatures in consecutive zones 110/135/135/135/135/140, with screws rotation speeds of 65 rpm. Extrudate of 3 mm cross section diameter has been air-cooled and fed to granulator.

### Example 7

Potato starch in amount of 96 weight % and citric acid in amount of 4 weight % have been mixed in double ribbon horizontal mixer at 100°C. Mixing process has been conducted for 2h, with rotation speed of 150 rpm. Directly after mixing has been finished, the preblend has been dosed using gravimeter feeder in order to extrude it. Extrusion has been conducted using single-screw extruder maintaining the following temperatures in consecutive zones: 120/126/126/126/126/126rpm, with screw rotation speed 74rpm. Extrudate of 3 mm cross section diameter has been air-cooled and fed to granulator.

### Example 8

Once the extrudate has been air-cooled using the fan system, it has been dosed into granulator. Granulation was conducted using high-speed granulation knife fed with starch extrudate from extruder. In the case of single-screw extruder the extrudate is fed with feeder tape whilst twin-screw extruder is equipped with internal granulator with feeder system of feed rolls. At the beginning of the granulation process the extrudate has to be transferred from extruder into granulator and in further step the extrudate is transferred continuously by feed rolls.

For obtained granules, the melt flow index was determined and the processing temperature was determined by injection method (Table 2), which the oars were made to carry out strength tests. The range of strength parameters of oars is presented in Table 3. The results of the weight gain test are shown in Table 4.

**Table 2. Processing parameters (example 1-5)**

| The range of flow indicators determined at 190-200 ° C, MFR, [g / 10min] | Injection temperature range [° C] |
|---|---|
| 10,0-18,0 | 135 - 160 |

**Table 3. Strength parameters for granulates according to Examples**

| Breaking stress [MPa] | Percentage elongation after fracture [%] | Tensile modulus while bending [Mpa] | Bending stress [MPa] [%] | Tensile modulus elasticity [Mpa] | Notched impact strength Charpy [kJ/m²] |
|---|---|---|---|---|---|
| 10,0-33,0 | 9-20 | 750-3250 | 40-150 | 640-2050 | 5,0-8,0 |

**Table 4. The results of mass growth test in climatic chamber at 25°C, 60% of humidity**

| Example | Mass growth after 7 at 25°C, 60% of humidity [%] | Mass growth after 14 days at 25°C, 60% of humidity [%] | Mass growth after 21 days at 25°C, 60% of humidity [%] | Sample properties after 21 days |
|---|---|---|---|---|
| 1 | 11,72 | 12,25 | 12,35 | Elastic sample, smooth surface |
| 2 | 11,47 | 11,78 | 11,99 | Elastic sample, smooth surface |
| 3 | 12,39 | 13,31 | 13,57 | Elastic sample, porous and flaking structure on the surface |
| 4 | 12,13 | 12,86 | 13,03 | Elastic sample, porous and flaking structure on the surface |

### Reference Example 9

Thermoplastic starch has been prepared from preblend produced according to Example 4 using twin-screw extruder maintaining the following temperatures in consecutive zones: 40/110/145/145/145/140/140/140/140/140, with screw rotation speed 130-136rpm. Resulting extrudate of 7 mm cross section dimeter has been air-cooled and grinded using Rapid 1514 mill.

### Reference Example 10

Preblend has been prepared in double ribbon horizontal mixer at 120°C with rotation speed of 150rpm. Potato starch and glycerine have been dosed at the same time into mixer at weight ratio of 3:1. Mixing has been conducted for 0,5h, and after it was finished the resulting preblend has been placed in closed containers and left for 24 h for conditioning process. After 24 h, the attempts were made to extrude the conditioned preblend in twin-screw extruder. Conditioned preblend (SEM image of clearly separated starch grains is shown on Figure 9) has been placed in the gravimetric feeder and temperatures of consecutive heating zones have been set for: 40/110/145/145/145/150/155/155/155/155, at screw rotational speed 130-136 rpm. Gravimetric feeder has been blocked and preblend has to be dosed manually in small amounts into the screws directly. Resulting small amount of extrudate has been milled as the extrudate was not suitable for granulation. After a very short time screws have been blocked by viscous preblend and equipment stopped working.

### Reference Example 11

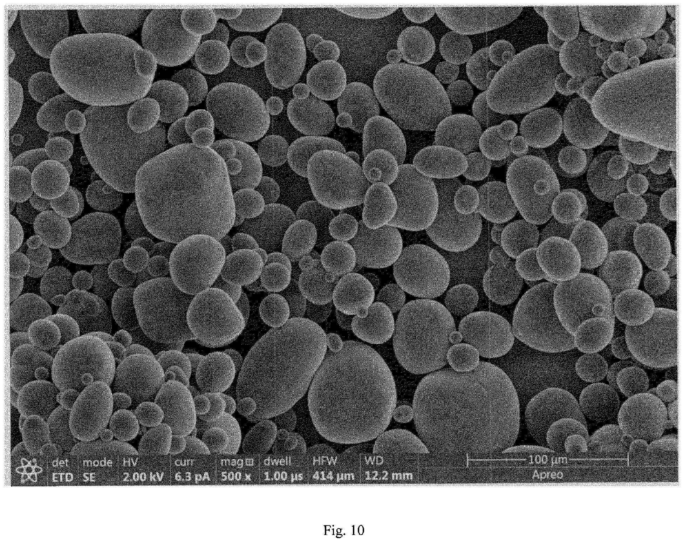

Preblend has been prepared in double ribbon horizontal mixer at 50°C with rotation speed of 150rpm. Potato starch and glycerine have been dosed at the same time into mixer at weight ratio of 3:1. Mixing has been conducted for 0,5h, and after it was finished the resulting preblend has been placed in closed containers and left for 24 h for conditioning process. After 24 h, the attempts were made to extrude the conditioned preblend in twin-screw extruder. Conditioned preblend has been placed in the gravimetric feeder and temperatures of consecutive heating zones have been set for: 40/110/145/145/145/150/155/155/155/155, at screw rotational speed 130-136 rpm Gravimetric feeder has been blocked and preblend has to be dosed manually in small amounts into the screws directly. Resulting small amount of extrudate has been milled as the extrudate was not suitable for granulation. After a very short time screws have been blocked by viscous preblend and equipment stopped working. SEM image of conditioned preblend is shown on Figure 10. Starch grains are also visibly separated in that case.

## Claims

1. Method of production thermoplastic starch comprising the steps of:
a) mixing the starch and at least one plasticizer in mixer in order to obtain preblend of thermoplastic starch;
b) extruding preblend of thermoplastic starch obtained in the step a) in order to obtain starch extrudate;
c) air-cooling of starch extrudate;
d) optional granulation of air-cooled starch extrudate,
**characterized in that**, the step b) follows directly after the step a) without conditioning step.

2. Method according to claim 1 **characterized in that** the plasticizer applied in step a) of the method is chosen from the group comprising citric acid, water, glycerine, sorbitol, more preferably the plasticizer is the mixture of glycerine and citric acid.

3. Method according to claims 1-2 **characterized in that** the citric acid content is at most 5 weight % based on the starch and plasticizer mixture.

4. Method according to any claims 1-3 **characterized in that** the weight ratio of starch to plasticizer and/or plasticizers mixture is in the range of 2:1 to 20:1.

5. Method according to any claims 1-4 **characterized in that**, the water content in the mixture of starch and plasticizer and/or plasticizers mixture in the step a) is at most 12 weight % based on the starch and plasticizer mixture.

6. Method according to any claims 1-5 **characterized in that**, the water content in preblend obtained in step a) is in the range of 2,5-4 weight % based on the starch and plasticizer mixture

7. Method according to any claims 1-6 **characterized in that**, the mixer temperature in step a) of the method is in the range of 60-120 °C and rotation speed of mixer is set on 60-150 rpm.

8. Method according to any claims 1-8 **characterized in that**, the time of mixing in step a) of the method is 1-9 h.

9. Method according to any claims 1-9 **characterized in that**, the preblend obtained in step a) of the method has bulk density at most 650 kg/m³, more preferably 615 -645 kg/m³.

10. Method according to any claims 1-10 **characterized in that**, in step b) of the method the extrusion is conducted in single- or twin-screw extruder.

11. Method according to any claims 1-11 **characterized in that**, the temperature in step b) of the method ranges from 130-150 °C.

12. Method according to any claims 1-12 **characterized in that** the speed of screw rotation in step b) of the method ranges from 50-70 rpm for single-screw extruder and is < 136 rpm for twin-screw extruder

13. Method according to any claims 1-13 **characterized in that** it is conducted in continuous mode.

14. Method according to any claims 1-14, **characterized in that** the starch is potato starch.

15. Thermoplastic starch produced with the method described in any of claims 1-14.
